(19) Europäisches Patentamt / European Patent Office / Office européen des brevets

(11) **EP 4 092 189 A1**

(12) **EUROPEAN PATENT APPLICATION**
published in accordance with Art. 153(4) EPC

(43) Date of publication:
**23.11.2022 Bulletin 2022/47**

(21) Application number: **20913309.9**

(22) Date of filing: **29.09.2020**

(51) International Patent Classification (IPC):
**D21H 17/63** (2006.01)     **C08J 3/12** (2006.01)
**D21H 17/26** (2006.01)

(52) Cooperative Patent Classification (CPC):
**C08J 3/12; D21H 17/26; D21H 17/63;** Y02W 30/91

(86) International application number:
**PCT/JP2020/036833**

(87) International publication number:
**WO 2021/145028 (22.07.2021 Gazette 2021/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.01.2020 JP 2020003767**

(71) Applicant: **Nippon Paper Industries Co., Ltd.
Tokyo 114-0002 (JP)**

(72) Inventors:
• **KUDO, Madoka**
  **Tokyo 114-0002 (JP)**
• **NAKATA, Yasuo**
  **Tokyo 114-0002 (JP)**
• **OISHI, Masatoshi**
  **Tokyo 114-0002 (JP)**

(74) Representative: **Carpmaels & Ransford LLP
One Southampton Row
London WC1B 5HA (GB)**

(54) **AGGREGATE OF FIBER AND INORGANIC PARTICLES**

(57)     The present invention aims to provide a technique for hindering inorganic particles from dropping from fibers even in contact with a liquid. According to the present invention, inorganic particles can be hindered from dropping from fibers even in contact with a liquid by adding carboxymethyl cellulose or a salt thereof.

## Fig. 1

EP 4 092 189 A1

**Description**

TECHNICAL FIELD

The present invention relates to assemblies in which a fiber and inorganic particles are aggregated, and processes for preparing them.

BACKGROUND ART

Fibers can exhibit various characteristics by depositing inorganic particles on their surface. In this connection, techniques for preparing complexes of inorganic particles with a fiber by synthesizing the inorganic particles in the presence of the fiber have been developed.
For example, PTL 1 describes complex fibers comprising calcium carbonate adhered to the surface of a fiber.

CITATION LIST

PATENT LITERATURE

PTL 1: JPA 2015-199655

SUMMARY OF INVENTION

TECHNICAL PROBLEM

Assemblies obtained by simply mixing inorganic particles and a fiber easily disintegrate when they are contacted with a liquid. Thus, the present invention aims to provide compositions comprising a fiber and inorganic particles wherein high percentages of the inorganic particles are retained after contact with a liquid in cases where they are used in the liquid, by appropriately adding a binder.

SOLUTION TO PROBLEM

As a result of careful studies to solve the problems described above, we found that inorganic particles do not easily drop even in contact with a liquid such as water by controlling the type or amount of the binder to form an assembly having a substantial size, and finally accomplished the present invention.
Thus, the present invention includes, but not limited to, the following aspects.

(1) An assembly comprising inorganic particles, a fiber and carboxymethyl cellulose or a salt thereof, which are aggregated to a size of 0.5 mm or more.
(2) The assembly of (1), wherein the fiber comprises a cellulose fiber.
(3) The assembly of (1) or (2), comprising 10 % by weight or more of the fiber.
(4) The assembly of any one of (1) to (3), wherein the weight ratio B/A between the amount of the inorganic particles in the residue retained on a 45-mesh sieve (having an opening of 355 $\mu$m) after screening through the sieve (B) and the amount of the inorganic particles before screening (A) is 0.7 or more.
(5) The assembly of any one of (1) to (4), having a size of 100 mm or less.
(6) The assembly of any one of (1) to (5), having a water content of less than 60 %.
(7) The assembly of any one of (1) to (6), comprising 0.1 to 30 % by weight of carboxymethyl cellulose or a salt thereof.
(8) The assembly of any one of (1) to (7), wherein the inorganic particles comprise a metal salt of calcium, magnesium, barium or aluminum, or metal particles containing titanium, copper or zinc, or a silicate.
(9) A process for preparing the assembly of any one of (1) to (8), comprising the steps of mixing a fiber, inorganic particles, and carboxymethyl cellulose or a salt thereof, and stirring the mixture.
(10) The process of (9), further comprising the step of drying the assembly to a water content of less than 60 %.

ADVANTAGEOUS EFFECTS OF INVENTION

According to the present invention, assemblies of a fiber and inorganic particles wherein high percentages of the inorganic particles are retained after contact with a liquid can be obtained. Therefore, the assemblies of a fiber and inorganic particles can be used in a liquid. Especially, high adsorptive effect can be conferred when inorganic particles having high adsorption performance are used. Further, the use of a binder in the process of preparing the assemblies of a fiber and inorganic particles makes it possible to confer functionalities depending on the characteristics of the inorganic particles while reducing the efflux of the inorganic particles when they are used in a liquid.

BRIEF DESCRIPTION OF DRAWINGS

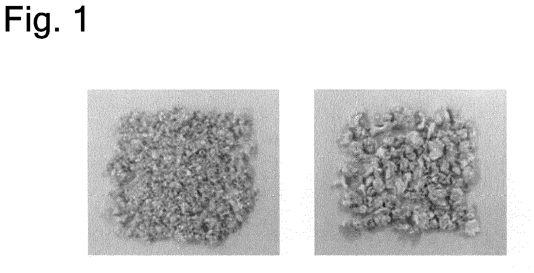

Fig. 1 shows photographs of the appearance of Sample 2 and Sample 15 (left panel: Sample 2, right panel: Sample 15).

DESCRIPTION OF EMBODIMENTS

In one aspect, the present invention relates to an assembly of inorganic particles, a fiber, and carboxymethyl cellulose or a salt thereof, which are aggregated to a substantial size so that the inorganic particles do not easily drop even in contact with a liquid such as water.

In the assembly of the present invention, the fiber and the inorganic particles more firmly adhere to each other by means of carboxymethyl cellulose or a salt thereof, whereby the inorganic particles do not easily drop from the fiber even in contact with a liquid such as water, as compared with those in which inorganic particles are simply mixed with a fiber. In the present invention, the strength of adhesion between the fiber and the inorganic particles can be evaluated by, for example, the retention (%) after contact with a liquid such as water.

In preferred embodiments, the retention is 60 % by mass or more, and in more preferred embodiments, it is 65 % by mass or more. In the assembly of the present invention, the inorganic particles more firmly adhere to the fiber so that the inorganic particles do not easily drop, as compared with those in which inorganic particles are simply mixed with a fiber or those in which inorganic particles are adhered to a fiber using hydrotalcite or the like. In one embodiment of the present invention, the inorganic content (%) of the assembly is preferably 20 % or more and 80 % or less, more preferably 30 % or more and 60 % or less.

In the present invention, the assembly of inorganic particles, a fiber, and carboxymethyl cellulose or a salt thereof which are aggregated to a substantial size can be prepared by mixing the fiber and the inorganic particles with carboxymethyl cellulose or a salt thereof and drying the mixture.

In the present invention, the assembly has a size of 0.5 mm or more. In preferred embodiments, the size of the assembly is 100 mm or less, or can be 10 mm or less, or 5 mm or less. If the size is reduced to 10 mm or less, the contact area between a liquid and the assembly increases so that the functions of the inorganic particles can be effective. For example, high adsorptive effect can be conferred when inorganic particles having high adsorption performance are used.

In preferred embodiments, the water content (moisture content) of the assembly can be 40 % or more, or 70 % or more, or even 90 % or more when it is dried. The water content of the composition is preferably higher because the efflux of the inorganic particles can be reduced during use in a liquid. The water content (moisture content) here can be determined by the equation below.

$$\text{(Weight (g) before drying - weight (g) after drying) / weight (g) after drying x 100}$$

For preparing the assembly of the present invention, various known auxiliaries can also be added. Such additives can be added preferably in an amount of 0.001 to 20 % by mass, more preferably 0.1 to 10 % by mass of the overall composition.

Carboxymethyl cellulose or a salt thereof

In the present invention, carboxymethyl cellulose or a salt thereof is used in addition to a fiber and inorganic particles. Carboxymethyl cellulose or a salt thereof has a structure in which hydroxyl groups in the glucose residues of cellulose are replaced by carboxymethyl ether groups. Carboxymethyl cellulose may be in the form of a salt. Salts of carboxymethyl cellulose may include metal salts such as carboxymethyl cellulose sodium salts and the like, for example.

As used herein, the term "cellulose" refers to a polysaccharide having a structure composed of D-glucopyranose units (or simply referred to as "glucose residues", or "anhydrous glucose units") linked by $\beta$-1,4 bonds. Cellulose is typically classified by its origin, production process or the like into natural cellulose, regenerated cellulose, fine cellulose, microcrystalline cellulose obtained by removing non-crystalline regions, and the like.

Examples of natural cellulose include bleached pulp or unbleached pulp (bleached wood pulp or unbleached wood pulp); linters and purified linters; cellulose produced by microorganisms such as acetic acid bacteria and the like. Raw materials of bleached pulp or unbleached pulp are not specifically limited, and include, for example, wood, cotton, straw, bamboo and the like. Further, the process for preparing bleached pulp or unbleached pulp is not specifically limited either, and may be a mechanical process, or a chemical process, or a combination of both. Types of bleached pulp or unbleached pulp classified by their production process include, for example, mechanical pulp, chemical pulp, groundwood pulp, sulfite pulp, kraft pulp and the like. Further, not only papermaking pulp but also dissolving pulp may be used. Dissolving pulp is chemically purified pulp, which is mostly dissolved in a chemical and used as the major raw material of man-made fibers, cellophane and the like.

Examples of regenerated cellulose include those obtained by dissolving cellulose in some solvent such as a copper-ammonia solution, cellulose xanthate solution, morpholine derivative or the like and freshly spinning the solution.

Examples of fine cellulose include those obtained by subjecting a cellulosic material such as natural cellulose or regenerated cellulose as described above to depolymerization (e.g., acid hydrolysis, alkaline hydrolysis, enzymatic degradation, blasting, vibratory ball milling or the like) and those obtained by mechanically treating such a cellulosic material.

In the present invention, the process for preparing carboxymethyl cellulose or a salt thereof is not limited, and known processes for preparing carboxymethyl cellulose or a salt thereof can be applied. Thus, carboxymethyl cellulose or a salt thereof in the present invention can be prepared by treating a raw material cellulose with a mercerizing agent (alkali) to prepare mercerized cellulose (alkali cellulose), which is then etherified by adding an etherifying agent.

Any type of cellulose described above can be used as the raw material cellulose, without specific limitation, but preferably used are those having a high cellulose purity, especially dissolving pulp or linters. By using them, carboxymethyl cellulose or a salt thereof having a high purity can be obtained.

Mercerizing agents that can be used include alkali metal hydroxide salts such as sodium hydroxide, potassium hydroxide and the like. Etherifying agents that can be used include monochloroacetic acid, sodium monochloroacetate and the like.

In preparation processes of typical water-soluble carboxymethyl cellulose, the molar ratio between the mercerizing agent and the etherifying agent is typically 2.00 to 2.45 when monochloroacetic acid is used as the etherifying agent. This is because if it is less than 2.00, the etherification reaction may be insufficient and unreacted monochloroacetic acid may be wastefully left, but if it exceeds 2.45, a side reaction may proceed between an excess of the mercerizing agent and monochloroacetic acid to produce alkali metal glycolate salts, leading to uneconomical results.

In the present invention, commercially available carboxymethyl cellulose or a salt thereof can be used as purchased or after it is treated as desired. Commercially available products include, for example, "SUNROSE" series (sodium salts of carboxymethyl cellulose from Nippon Paper Industries Co., Ltd.).

Inorganic particles

In the present invention, the inorganic particles are not specifically limited, but preferably insoluble or slightly soluble in water. The inorganic particles are preferably insoluble or slightly soluble in water because the inorganic particles are sometimes synthesized in an aqueous system or sometimes used in contact with a liquid such as water.

As used herein, the term "inorganic particles" refers to a compound of a metal element or a non-metal element. The compound of a metal element refers to the so-called inorganic salt formed by an ionic bond between a metal cation (e.g., $Na^+$, $Ca^{2+}$, $Mg^{2+}$, $Al^{3+}$, $Ba^{2+}$ or the like) and an anion (e.g., $O^{2-}$, $OH^-$, $CO_3^{2-}$, $PO_4^{3-}$, $SO_4^{2-}$, $NO_3^-$, $Si_2O_3^{2-}$, $SiO_3^{2-}$, $Cl^-$, $F^-$, $S^{2-}$ or the like). The compound of a non-metal element includes, for example, a silicate ($SiO_2$) or the like. In the present invention, the inorganic particles are preferably at least partially a metal salt of calcium, magnesium or barium, or the inorganic particles are preferably at least partially a silicate, or a metal salt of aluminum, or metal particles containing titanium, copper, silver, iron, manganese, cerium or zinc.

In one preferred embodiment, the average particle size (average primary particle size) of the inorganic particles in the present invention can be, for example, 1.5 $\mu$m or less, or the average primary particle size can be 1200 nm or less, or 900 nm or less, or the average primary particle size can be even 200 nm or less, or 150 nm or less. On the other hand, the average primary particle size of the inorganic particles can be 10 nm or more. It should be noted that the average primary particle size can be determined from electron micrographs.

These inorganic particles can be synthesized by a known method, which may be either a gas-liquid or liquid-liquid process. An example of gas-liquid processes is the carbonation process, according to which magnesium carbonate can be synthesized by reacting magnesium hydroxide and carbonic acid gas, for example. Examples of liquid-liquid processes include the reaction between an acid (e.g., hydrochloric acid, sulfuric acid or the like) and a base (e.g., sodium hydroxide, potassium hydroxide or the like) by neutralization; the reaction between an inorganic salt and an acid or a base; and the reaction between inorganic salts. For example, barium sulfate can be obtained by reacting barium hydroxide and sulfuric acid, or aluminum hydroxide can be obtained by reacting aluminum sulfate and sodium hydroxide, or composite inorganic particles of calcium and aluminum can be obtained by reacting calcium carbonate and aluminum sulfate. Such syntheses of inorganic particles can be performed in the presence of any metal or non-metal compound in the reaction solution, in which case the metal or non-metal compound is efficiently incorporated into the inorganic particles. For example, composite particles of calcium phosphate and titanium can be obtained by adding phosphoric acid to calcium carbonate to synthesize calcium phosphate in the presence of titanium dioxide in the reaction solution.

(Clay minerals containing smectite)

In one embodiment of the present invention, a clay mineral containing smectite is used as the inorganic particles. Smectite is a clay mineral having the property of being swollen when it absorbs water (swellability) and has a high ion exchange capacity.

Smectite consists mostly of montmorillonite and may contain silica minerals (quartz, cristobalite, opal), silicate minerals (feldspar, zeolite), clay minerals (mica, illite), carbonate minerals (calcite, dolomite), sulfate minerals (gypsum), and sulfide minerals (pyrite) as minor components.

Montmorillonite, which is the major component of smectite, is one of layered silicate minerals and, in one embodiment, has a crystalline structure formed of stacks of three sheets, i.e., tetrahedral silica sheet - octahedral alumina sheet - tetrahedral silica sheet. Montmorillonite is in the form of very thin plates, and in one embodiment, a unit layer has a thickness of about 10Å and a width of 100 to 1000 nm. Montmorillonite is negatively charged as the central atom Al of the octahedral alumina sheet is partially replaced by magnesium (Mg), and cations such as $Na^+$, $K^+$, $Ca^{2+}$, $Mg^{2+}$, $H^+$ and the like (exchangeable cations) are intercalated between the layers as counterions for the negative charge to balance the charge state. In the present invention, smectite preferably contains 50 % by weight or more, more preferably 70 % by weight or more of montmorillonite.

Clay minerals containing smectite include bentonite, hectorite, montmorillonite, beidellite, hectorite, saponite, stevensite, sauconite, nontronite, activated clay, acid clay and the like.

In the present invention, bentonite is preferably used as the clay mineral. Bentonite is a clay mineral consisting mostly of montmorillonite and containing silica minerals, silicate minerals and the like as minor components. Bentonite preferably contains 50 % by weight or more, more preferably 70 % by weight or more of montmorillonite. The characteristics of bentonite depend on the properties and the content of montmorillonite. Interlayer ions of montmorillonite have the property of being readily exchanged, and bentonite is referred to as Na-bentonite or Ca-bentonite depending on whether it contains montmorillonite having $Na^+$ ions or $Ca^+$ ions as the dominant exchangeable cations. Bentonite is excellent in oil absorption, hygroscopicity, water absorption, cation exchange capacity, swellability, thickening property, and adsorptivity. Therefore, fibers in which bentonite is efficiently retained are excellent in oil absorption, hygroscopicity, water absorption, cation exchange capacity, swellability, thickening property, adsorptivity and the like.

In the assemblies of the present invention, the proportion of the clay mineral such as bentonite is preferably 5 to 60 % by mass, more preferably 10 to 50 % by mass, or may be 15 to 45 % by mass or 20 to 40 % by mass. The higher the proportion of the clay mineral, the more the characteristics of the clay mineral can be conferred, and if the clay mineral is bentonite, high oil absorption or hygroscopicity can be conferred.

Bentonite products that can be used as the clay mineral in the present invention include commercial products having any purity commonly available for industrial or experimental uses, but preferably clay minerals containing 50 % by mass or more, more preferably clay minerals containing 80 % by mass or more of bentonite, for the purpose of conferring oil absorption or hygroscopicity.

The clay mineral preferably has a particle size of 200 to 8000 nm, more preferably 300 to 5000 nm, still more preferably 500 to 2000 nm. If the particle size is within this range, the retention can be further improved.

Clay minerals containing smectite may be used after they have been surface-treated. Surface-treating agents include, but not limited to, metal oxides such as silica, alumina, zinc oxide and the like.

(Calcium carbonate)

Calcium carbonate can be synthesized by, for example, the carbonation process, the soluble salt reaction process, the lime-soda process, the soda process or the like, and in preferred embodiments, calcium carbonate is synthesized by the carbonation process.

Typically, the preparation of calcium carbonate by the carbonation process involves using lime as a calcium source to synthesize calcium carbonate via a slaking step in which water is added to quick lime CaO to give slaked lime $Ca(OH)_2$ and a carbonation step in which carbonic acid gas CO2 is injected into the slaked lime to give calcium carbonate $CaCO_3$. During then, the suspension of slaked lime prepared by adding water to quick lime may be passed through a screen to remove less soluble lime particles contained in the suspension. Alternatively, slaked lime may be used directly as a calcium source. In cases where calcium carbonate is synthesized by the carbonation process in the present invention, the carbonation reaction may be performed in the presence of cavitation bubbles.

In cases where calcium carbonate is synthesized by the carbonation process, the aqueous suspension of slaked lime preferably has a solids content in the order of 0.1 to 40 % by weight, more preferably 0.5 to 30 % by weight, still more preferably 1 to 20 % by weight. If the solids content is low, the reaction efficiency decreases and the production cost increases, but if the solids content is too high, the flowability decreases and the reaction efficiency decreases. In the present invention, calcium carbonate is synthesized in the presence of cavitation bubbles, whereby the reaction solution and carbonic acid gas can be mixed well even if a suspension (slurry) having a high solids content is used.

Aqueous suspensions containing slaked lime that can be used include those commonly used for the synthesis of calcium carbonate, and can be prepared by, for example, mixing slaked lime with water or by slaking (digesting) quick lime (calcium oxide) with water. The slaking conditions include, but not specifically limited to, a CaO concentration of 0.05 % by weight or more, preferably 1 % by weight or more, and a temperature of 20 to 100 °C, preferably 30 to 100 °C, for example. Further, the average residence time in the slaking reactor (slaker) is not specifically limited either, but can be, for example, 5 minutes to 5 hours, and preferably within 2 hours. It should be understood that the slaker may be batch or continuous. It should be noted that, in the present invention, the carbonation reactor (carbonator) and the slaking reactor (slaker) may be provided separately, or one reactor may serve as both carbonation reactor and slaking reactor.

(Magnesium carbonate)

Magnesium carbonate can be synthesized by a known method. For example, basic magnesium carbonate can be synthesized via normal magnesium carbonate from magnesium bicarbonate, which is synthesized from magnesium hydroxide and carbonic acid gas. Magnesium carbonate can be obtained in various forms such as magnesium bicarbonate, normal magnesium carbonate, basic magnesium carbonate and the like depending on the synthesis method, among which basic magnesium carbonate is especially preferred. This is because magnesium bicarbonate is relatively unstable, while normal magnesium carbonate consists of columnar (needle-like) crystals that may be less likely to adhere to fibers.

Further in the present invention, the reaction solution in the reactor can be used in circulation. Thus, the reaction efficiency increases and desired inorganic particles can be readily obtained by circulating the reaction solution to increase contacts between the reaction solution and carbonic acid gas.

In the present invention, a gas such as carbon dioxide (carbonic acid gas) is injected into the reaction vessel where it can be mixed with the reaction solution. According to the present invention, the reaction can be performed with good efficiency because carbonic acid gas can be supplied to the reaction solution without using any gas feeder such as a fan, blower or the like and the carbonic acid gas is finely dispersed by cavitation bubbles.

In the present invention, the concentration of carbon dioxide in the gas containing carbon dioxide is not specifically limited, but the concentration of carbon dioxide is preferably higher. Further, the amount of carbonic acid gas introduced into the injector is not limited and can be selected as appropriate.

The gas containing carbon dioxide of the present invention may be substantially pure carbon dioxide gas or a mixture with another gas. For example, not only carbon dioxide gas but also a gas containing an inert gas such as air or nitrogen can be used as the gas containing carbon dioxide. Alternatively, not only carbon dioxide gas (carbonic acid gas) but also exhaust gases discharged from incinerators, coal-fired boilers, heavy oil-fired boilers and the like in papermaking factories can be conveniently used as the gas containing carbon dioxide. Moreover, the carbonation reaction can also be performed using carbon dioxide emitted from the lime calcination process.

(Barium sulfate)

Barium sulfate is a crystalline ionic compound represented by the formula $BaSO_4$ and composed of barium ions and sulfate ions, and often assumes a plate-like or columnar form and is poorly soluble in water. Pure barium sulfate occurs as colorless crystals, but turns yellowish brown or black gray and translucent when it contains impurities such as iron, manganese, strontium, calcium or the like. It occurs as a natural mineral or can be synthesized by chemical reaction. Especially, synthetic products obtained by chemical reaction are not only used for medical purposes (as radiocontrast agents) but also widely used for paints, plastics, storage batteries and the like by taking advantage of their chemical stability.

In the present invention, barium sulfate can be synthesized in a solution in the presence of a fiber. For example, possible methods include the reaction between an acid (e.g., sulfuric acid or the like) and a base by neutralization; the reaction between an inorganic salt and an acid or a base; and the reaction between inorganic salts. For example, barium sulfate can be obtained by reacting barium hydroxide and sulfuric acid or aluminum sulfate, or barium sulfate can be precipitated by adding barium chloride into an aqueous solution containing a sulfate.

(Hydrotalcite)

Hydrotalcite can be synthesized by a known method. For example, hydrotalcite is synthesized via a co-precipitation reaction at controlled temperature, pH and the like by immersing a fiber in an aqueous carbonate solution containing carbonate ions forming interlayers and an alkaline solution (sodium hydroxide or the like) in a reaction vessel, and then adding an acid solution (an aqueous metal salt solution containing divalent metal ions and trivalent metal ions forming host layers). Alternatively, hydrotalcite can also be synthesized via a co-precipitation reaction at controlled temperature, pH and the like by immersing a fiber in an acid solution (an aqueous metal salt solution containing divalent metal ions and trivalent metal ions forming host layers) in a reaction vessel, and then adding dropwise an aqueous carbonate solution containing carbonate ions forming interlayers and an alkaline solution (sodium hydroxide or the like). The reaction typically takes place at ordinary pressure, though a process involving a hydrothermal reaction using an autoclave or the like has also been proposed (JPA 1985-6619).

In the present invention, chlorides, sulfides, nitrates and sulfates of magnesium, zinc, barium, calcium, iron, copper, cobalt, nickel, and manganese can be used as sources of divalent metal ions forming host layers. On the other hand, chlorides, sulfides, nitrates and sulfates of aluminum, iron, chromium and gallium can be used as sources of trivalent metal ions forming host layers.

In the present invention, carbonate ions, nitrate ions, chloride ions, sulfate ions, phosphate ions and the like can be used as interlayer anions. Sodium carbonate is used as a source of carbonate ions, when they are used as interlayer anions. However, sodium carbonate can be replaced by a gas containing carbon dioxide (carbonic acid gas) such as substantially pure carbon dioxide gas or a mixture with another gas. For example, exhaust gases discharged from incinerators, coal-fired boilers, heavy oil-fired boilers and the like in papermaking factories can be conveniently used as the gas containing carbon dioxide. Moreover, the carbonation reaction can also be performed using carbon dioxide emitted from the lime calcination process.

(Alumina/silica)

Alumina and/or silica can be synthesized by a known method. When any one or more of an inorganic acid or an aluminum salt is used as a starting material of the reaction, the synthesis is accomplished by adding an alkali silicate. The synthesis can also be accomplished by using an alkali silicate as a starting material and adding any one or more of an inorganic acid or an aluminum salt, but the product adheres better to fibers when an inorganic acid and/or aluminum salt is used as a starting material. Inorganic acids that can be used include, but not specifically limited to, sulfuric acid, hydrochloric acid, nitric acid and the like, for example. Among them, sulfuric acid is especially preferred in terms of cost and handling. Aluminum salts include aluminum sulfate, aluminum chloride, aluminum polychloride, alum, potassium alum and the like, among which aluminum sulfate can be conveniently used. Alkali silicates include sodium silicate or potassium silicate or the like, among which sodium silicate is preferred because of easy availability. The molar ratio between silicate and alkali is not limited, but commercial products having an approximate molar ratio of $SiO_2 : Na_2O =$ 3 to 3.4 : 1 commonly distributed as sodium silicate J3 can be conveniently used.

In the present invention, silica and/or alumina are preferably synthesized while maintaining the pH of the reaction solution at 4.6 or less.

(Aluminum hydroxide)

Aluminum hydroxide is a crystalline ionic compound represented by the formula $Al(OH)_3$ and composed of aluminum ions and hydroxide ions, and often assumes a particulate form and is poorly soluble in water. Synthetic products obtained by chemical reaction are not only used for pharmaceuticals and adsorbents but also used for flame retardants or fire retardants by taking advantage of their property of releasing water when heated.

In the present invention, aluminum hydroxide can be synthesized in a solution in the presence of a fiber. For example, possible methods include the reaction between an acid (e.g., sulfuric acid or the like) and a base by neutralization; the reaction between an inorganic salt and an acid or a base; and the reaction between inorganic salts. For example, aluminum hydroxide can be obtained by reacting sodium hydroxide and aluminum sulfate, or aluminum hydroxide can be precipitated by adding aluminum chloride into an aqueous solution containing an alkali salt.

Fibers

The fiber forming part of the present invention is preferably a cellulose fiber, for example. Examples of raw materials of cellulose fibers include pulp fibers (wood pulp and non-wood pulp), bacterial cellulose, animal-derived cellulose such as Ascidiacea, and algae. Wood pulp may be prepared by pulping wood raw materials. Wood raw materials that can be used include softwoods and/or hardwoods, among which softwoods include, for example, Pinus densiflora, Pinus thunbergii, Abies sachalinensis, Picea jezoensis, Pinus koraiensis, Larix kaempferi, Abies firma, Tsuga sieboldii, Cryptomeria japonica, Chamaecyparis obtusa, Larix kaempferi, Abies veitchii, Picea jezoensis var. hondoensis, Thujopsis dolabrata, Douglas fir (Pseudotsuga menziesii), hemlock (Conium maculatum), white fir (Abies concolor), spruces, balsam fir (Abies balsamea), cedars, pines, Pinus merkusii, Pinus radiata, and the like; and hardwoods include, for example, Fagus crenata, birches, Alnus japonica, oaks, Machilus thunbergii, Castanopsis, Betula platyphylla, Populus nigra var. italica, poplars, Fraxinus, Populus maximowiczii, Eucalyptus, mangroves, Meranti, Acacia and the like.

The technique for pulping the wood raw materials (woody raw materials) is not specifically limited, and examples include pulping processes commonly used in the papermaking industry. Wood pulp can be classified by the pulping process into, for example, chemical pulp obtained by digestion via the kraft process, sulfite process, soda process, polysulfide process or the like; mechanical pulp obtained by pulping with a mechanical force such as a refiner, grinder or the like; semichemical pulp obtained by pulping with a mechanical force after a chemical pretreatment; waste paper pulp; deinked pulp and the like. The wood pulp may have been unbleached (before bleaching) or bleached (after bleaching).

Examples of raw materials of non-wood pulp include cotton, hemp, sisal (Agave sisalana), abaca (Musa textilis), flax, straw, bamboo, bagas, kenaf, sugar cane, corn, rice straw, Broussonetia kazinoki × B. papyrifera, Edgeworthia chrysantha and the like.

The pulp fibers may be unbeaten or beaten, but they are preferably beaten. Beaten pulp fibers can be expected to not only improve the strength but also promote the adhesion of clay minerals and inorganic binders to the pulp fibers. Beaten pulp fibers can also be expected to improve the BET specific surface area. It should be noted that the degree of beating of a pulp fiber can be expressed by Canadian Standard Freeness (CSF) defined in JIS P 8121-2: 2012. As beating proceeds, the drainage of the pulp fiber declines and the freeness decreases.

The concentration of the cellulose fiber is preferably 10 % or more, or can be 20 % or more, or can be 30 % or more.

Moreover, the cellulosic raw materials can be further treated, whereby they can also be used as powdered cellulose, or chemically modified cellulose such as oxidized cellulose.

Various fibers other than cellulose fibers may also be used, including natural fibers, synthetic fibers, semisynthetic fibers and inorganic fibers. Natural fibers include, for example, protein fibers such as wool and silk yarns and collagen fibers; complex carbohydrate fibers such as chitin-chitosan fibers and alginate fibers and the like. Synthetic fibers include, for example, polyethylene terephthalate fibers (PET fibers), polyester fibers, polyamide fibers, polyolefin fibers, and acrylic fibers; and semisynthetic fibers include rayon, lyocell, acetate and the like. Inorganic fibers include glass fiber, carbon fiber, various metal fibers and the like.

In one embodiment of the present invention, a composite fiber of a synthetic fiber with a cellulose fiber can also be used, e.g., a composite fiber of a polyester, polyamide, polyolefin or acrylic fiber, glass fiber, carbon fiber, any of various metal fibers or the like with a cellulose fiber.

The fibers shown above may be used alone or two or more of them may be used in combination as the fiber forming part of the complex fiber. The fiber forming part of the complex fiber preferably comprises a wood pulp or consist of a wood pulp alone among the examples shown above. Alternatively, the fiber forming part of the complex fiber preferably comprises a combination of a non-wood pulp or a synthetic fiber with a wood pulp. In preferred embodiments, the fiber forming part of the complex fiber is a pulp fiber.

The fiber length of the fiber is not specifically limited, and the average fiber length can be, for example, in the order of 0.1 $\mu$m to 15 mm, or may be 10 $\mu$m to 12 mm, 50 $\mu$m to 10 mm, 200 $\mu$m to 8 mm or the like. Especially in the present invention, the average fiber length is preferably longer than 50 $\mu$m for ease of dehydration and sheet forming. The average fiber length is more preferably longer than 200 $\mu$m, because dehydration and sheet forming can be performed using the mesh of wires (filters) for dehydration and/or papermaking used in typical papermaking processes.

The fiber diameter of the fiber is not specifically limited, and the average fiber diameter can be, for example, in the order of 1 nm to 100 $\mu$m, or may be 10 nm to 100 $\mu$m, 150 nm to 100 $\mu$m, 1 $\mu$m to 90 $\mu$m, 3 to 50 $\mu$m, 5 to 30 $\mu$m or the like. Especially in the present invention, the average fiber diameter is preferably more than 500 nm for ease of dehydration and sheet forming. The average fiber diameter is more preferably more than 1 $\mu$m, because dehydration and sheet forming can be performed using the mesh of wires (filters) for dehydration and/or papermaking used in typical papermaking processes.

The fiber is preferably used in such an amount that 15 % or more of the surface of the fiber is covered by inorganic particles. For example, the mass ratio between the fiber and the inorganic particles is preferably 25/75 to 95/5, more preferably 30/70 to 90/10, still more preferably 40/60 to 85/15.

Applications and the like of the assemblies

The assemblies of the present invention can be used for various applications and they can be widely used for any applications including, for example, paper, fibers, nonwoven fabric, cellulosic composite materials, filter materials, paints, plastics and other resins, rubbers, elastomers, ceramics, glass, metals, tires, building materials (asphalt, asbestos, cement, boards, concrete, bricks, tiles, plywoods, fiber boards and the like), various carriers (catalyst carriers, drug carriers, agrochemical carriers, microbial carriers and the like), anti-wrinkle agents, clay, abrasives, modifiers, repairing materials, thermal insulation materials, damp proofing materials, water repellent materials, waterproofing materials, light shielding materials, sealants, shielding materials, insect repellents, adhesives, inks, cosmetic preparations, medical materials, paste materials, food additives, tablet excipients, dispersants, structuring agents, water retention agents, filter aids, oil rectification additives, oil processing additives, oil reforming additives, electromagnetic wave absorbers, insulating materials, acoustic insulation materials, vibration damping materials, semiconductor sealing materials, radiation shielding materials, sanitary products, cosmetics, fertilizers, feedstuffs, perfumes, additives for paints/adhesives/resins, discoloration inhibitors, electrically conductive materials, thermally conductive materials and the like. They also can be used for various fillers, coating agents and the like in the applications mentioned above.

The assemblies of the present invention may also be applied for papermaking purposes. Papers comprising the assemblies of the present invention are also an embodiment of the present invention. Exemplary papers include, for example, printing paper, newsprint paper, inkjet printing paper, PPC paper, kraft paper, woodfree paper, coated paper, lightweight coated paper, wrapping paper, thin paper, colored woodfree paper, cast-coated paper, carbonless copy paper, label paper, heat-sensitive paper, various types of fancy paper, water-soluble paper, release paper, process paper, hanging base paper, base paper for decorative melamine paper, incombustible paper, flame retardant paper, base paper for laminated boards, printed electronics paper, battery separators, cushion paper, tracing paper, impregnated paper, paper for ODP, building paper, paper for decorative building materials, envelope paper, paper for tapes, heat exchange paper, chemical fiber paper, aseptic paper, water resistant paper, oil resistant paper, oil absorbing paper, moisture absorbing paper, heat resistant paper, photocatalytic paper, cigarette rolling paper, paperboards (liners, corrugating media, white paperboards and the like), base paper for paper plates, base paper for cups, baking paper, abrasive paper, synthetic paper and the like.

The assemblies of the present invention can be formed into sheets by converting an aqueous slurry containing such an assembly into a sheet. When the assemblies of the present invention are used to form sheets, the inorganic particles do not easily drop from the fiber during sheet forming so that the inorganic particles are well retained in the sheets. Further, according to the present invention, the inorganic particles can be uniformly incorporated into the sheets so that the resulting sheets have little difference between both sides.

The basis weight of the sheets can be appropriately adjusted depending on the purposes, and it is, for example, 10 to 600 g/m$^2$, preferably 20 to 500 g/m$^2$, more preferably 30 to 400 g/m$^2$, or may be 50 to 200 g/m$^2$. The sheets may have a single layer structure or a multilayer structure composed of multiple stacked layers depending on the purposes or the like, and individual layers in the multilayer structure may have the same or different compositions.

Paper machines (sheet-forming machines) used for preparing sheets include, for example, Fourdrinier machines, cylinder machines, gap formers, hybrid formers, multilayer paper machines, known sheet-forming machines combining the papermaking methods of these machines and the like.

During sheet forming, additives such as strength additives (paper strength additives) can be added, and both wet and dry strength additives can be used. Other additives include drainage aids, internal sizing agents, pH modifiers, antifoaming agents, pitch control agents, slime control agents, bulking agents, fillers such as calcium carbonate, kaolin, talc and the like depending on the purposes. The amount of each additive to be used is not specifically limited.

The present invention is not limited to each embodiment described above, but various changes can be made and embodiments obtained by combining as appropriate the technical means disclosed in different embodiments are also included in the technical scope of the present invention.

EXAMPLES

The present invention will be explained more in detail with reference to specific examples, but the present invention is not limited to the specific examples below. Unless otherwise specified, the concentrations, parts and the like as used herein are based on mass, and the numerical ranges are described to include their endpoints.

Experiment 1

1-1. Sample 1

Titanium (IV) oxide (rutile form, average particle size 5 μm, from FUJIFILM Wako Pure Chemical Corporation) was used as inorganic particles, and the fiber used was a pulp fiber (cellulose fiber) (average fiber length: 1.2 mm, average fiber diameter: 25 μm, pulp fiber consistency: 30 %) consisting of a bleached hardwood kraft pulp (LBKP from Nippon Paper Industries Co., Ltd.) adjusted to a Canadian Standard Freeness of 400 ml using a single disc refiner (SDR). An aqueous solution of carboxymethyl cellulose (CMC available under brand name SUNROSE, type F1400MC from Nippon Paper Industries Co., Ltd.) prepared at a concentration of 1 % was used as a binder.

The pulp fiber having a water content of about 70 % (pulp solids 10 g) was crushed in a mixer for 2 minutes, and then the inorganic particles (10 g) and the 1 % aqueous CMC solution (25 g) were added, and the mixture was stirred in the mixer for 5 minutes. Then, the mixture was dried to a water content of about 5 % using a dryer (natural convection incubator DSN-115S from Isuzu Seisakusho Co., Ltd.), thereby giving an assembly of titanium oxide, cellulose fiber, and CMC aggregated to a substantial size.

1-2. Sample 2 (Fig. 1, left panel)

A sample was prepared in the same manner as described for Sample 1 except that bentonite (from FUJIFILM Wako Pure Chemical Corporation) was used as inorganic particles.

1-3. Sample 3

A sample was prepared in the same manner as described for Sample 1 except that calcium carbonate (JIS special grade reagent from FUJIFILM Wako Pure Chemical Corporation) was used as inorganic particles.

1-4. Sample 4

A sample was prepared in the same manner as described for Sample 2 except that the amount of the binder used was changed.

1-5. Sample 5

A sample was prepared in the same manner as described for Sample 2 except that the amount of the binder used was changed.

1-6. Sample 6

A sample was prepared in the same manner as described for Sample 1 except that the fiber was changed. Specifically, a pulp fiber (average fiber length: 1.8 mm, average fiber diameter: 31 $\mu$m, pulp fiber consistency: 30 %) was used, consisting of a bleached softwood kraft pulp (NBKP from Nippon Paper Industries Co., Ltd.) adjusted to a Canadian Standard Freeness of 400 ml using a single disc refiner (SDR).

1-7. Sample 7

A sample was prepared in the same manner as described for Sample 2 except that the fiber was changed. Specifically, a pulp fiber (average fiber length: 1.8 mm, average fiber diameter: 31 $\mu$m, pulp fiber consistency: 30 %) was used, consisting of a bleached softwood kraft pulp (NBKP from Nippon Paper Industries Co., Ltd.) adjusted to a Canadian Standard Freeness of 400 ml using a single disc refiner (SDR).

1-8. Sample 8

A sample was prepared in the same manner as described for Sample 3 except that the fiber was changed. Specifically, a pulp fiber (average fiber length: 1.8 mm, average fiber diameter: 31 $\mu$m, pulp fiber consistency: 30 %) was used, consisting of a bleached softwood kraft pulp (NBKP from Nippon Paper Industries Co., Ltd.) adjusted to a Canadian Standard Freeness of 400 ml using a single disc refiner (SDR).

1-9. Sample 9

A sample was prepared in the same manner as described for Sample 2 except that it was dried to a water content of 26 % (solids content: 74 %).

1-10. Sample 10

A sample was prepared in the same manner as described for Sample 2 except that it was dried to a water content of 55 % (solids content: 45 %).

1-11. Sample 11

A sample was prepared in the same manner as described for Sample 2 except that the pulp fiber having a water content of about 70 % (pulp solids 10 g) was crushed in a mixer for 10 minutes.

1-12. Sample 12

A sample was prepared in the same manner as described for Sample 2 except that the pulp fiber having a water content of about 70 % (pulp solids 10 g) was crushed in a mixer for 30 seconds.

1-13. Sample 13

A sample was prepared in the same manner as described for Sample 2 except that the fiber was changed. Specifically, a pulp fiber (average fiber length: 1.3 mm, average fiber diameter: 26 $\mu$m, pulp fiber consistency: 30 %) was used, consisting of a mixture of a bleached hardwood kraft pulp (LBKP from Nippon Paper Industries Co., Ltd.) and a bleached softwood kraft pulp (NBKP from Nippon Paper Industries Co., Ltd.) in a mass ratio of 1: 9 adjusted to a Canadian Standard Freeness of 400 ml using a single disc refiner (SDR).

1-14. Sample 14

A sample was prepared in the same manner as described for Sample 2 except that the fiber was changed. Specifically, a pulp fiber (average fiber length: 1.5 mm, average fiber diameter: 28 $\mu$m, pulp fiber consistency: 30 %) was used, consisting of a mixture of a bleached hardwood kraft pulp (LBKP from Nippon Paper Industries Co., Ltd.) and a bleached softwood kraft pulp (NBKP from Nippon Paper Industries Co., Ltd.) in a mass ratio of 5: 5 adjusted to a Canadian Standard Freeness of 400 ml using a single disc refiner (SDR).

1-15. Sample 15 (Fig. 1, right panel)

A sample was prepared in the same manner as described for Sample 2 except that the fiber was changed. Specifically, a pulp fiber (average fiber length: 1.7 mm, average fiber diameter: 30 $\mu$m, pulp fiber consistency: 30 %) was used, consisting of a mixture of a bleached hardwood kraft pulp (LBKP from Nippon Paper Industries Co., Ltd.) and a bleached softwood kraft pulp (NBKP from Nippon Paper Industries Co., Ltd.) in a mass ratio of 1: 9 adjusted to a Canadian Standard Freeness of 400 ml using a single disc refiner (SDR).

1-16. Sample 16

A sample was prepared in the same manner as described for Sample 2 except that the fiber was changed. Specifically, a pulp fiber (average fiber length: 4.6 mm, average fiber diameter: 13 $\mu$m, pulp fiber consistency: 30 %) was used, consisting of abaca (Musa textilis) (from NIPPON PAPER PAPYLIA CO., LTD.) adjusted to a Canadian Standard Freeness of 400 ml using a single disc refiner (SDR).

1-17. Sample 17

A sample was prepared in the same manner as described for Sample 2 except that the fiber was changed. Specifically, a pulp fiber was used, consisting of a PET fiber (ECOPET from TEIJIN FRONTIER CO., LTD.) cut into a fiber length of 5 mm with scissors and adjusted to a fiber consistency of 30 % by adding water.

1-18. Sample 18

A sample was prepared in the same manner as described for Sample 2 except that no binder was used.

1-19. Sample 19

A sample was prepared in the same manner as described for Sample 2 except that 25 % by weight of hydrotalcite (from FUJIFILM Wako Pure Chemical Corporation) was used as a binder.

Experiment 2

The samples obtained in Experiment 1 were evaluated for the following parameters.

(1) Water content

Each sample was weighed before and after it was dried at 105 °C for 2 hours or more, and the water content (%) was calculated by the equation below:

$$\{1 - (\text{the weight of the sample after drying at } 105\ °C) / (\text{the weight of the sample before drying})\} \times 100$$

(2) Size (diameter)

The diameters of randomly chosen 50 samples of 0.5 mm or more in size were determined by measuring the longest distance across each sample using a ruler.

(3) Retention

Each sample was contacted with an immersion fluid (water) according to the Disintegration
Test as defined in the Japanese Pharmacopoeia, 17th Edition. Then, the sample was passed through a 45-mesh sieve, and the residue retained on the sieve was collected and analyzed for its inorganic content. The inorganic content was determined by measuring the mass of the sample (ash content) after it was baked at 525 °C for 2 hours according to JIS P 8251: 2003. The retention (%) of inorganic matter in the sample was calculated by the equation below:

$$(\text{the amount of inorganic matter contained in a composition after contact with the immersion fluid}) / (\text{the amount of inorganic matter incorporated into the sample}) \times 100.$$

[Table 1]

| Sample | | 1 | 2 | 3 | 4 | 5 | 6 | 7 | 8 |
|---|---|---|---|---|---|---|---|---|---|
| Raw material | Fiber | LBKP 100% | LBKP 100% | LBKP 100% | LBKP 100% | LBKP 100% | NBKP 100% | NBKP 100% | NBKP 100% |
| | Inorganic matter | Ti dioxide | Bentonite | Ca carbonate | Bentonite | Bentonite | Ti dioxide | Bentonite | Ca carbonate |
| | Binder | CMC | CMC | CMC | CMC | CMC | CMC | CMC | CMC |
| Proportion (wt%) | Fiber | 49 | 49 | 49 | 49 | 20 | 49 | 49 | 49 |
| | Inorganic matter | 50 | 50 | 50 | 50 | 50 | 50 | 50 | 50 |
| | Binder | 1 | 1 | 1 | 0.12 | 30 | 1 | 1 | 1 |
| Observed value | Water content (%) | 5 | 4 | 7 | 4 | 5 | 6 | 5 | 5 |
| | Diameter (mm) | 1-3 | 1-3 | 1-3 | 1-3 | 2-4 | 4-6 | 4-6 | 4-6 |
| | Retention of inorganic matter (%) | 74 | 73 | 75 | 70 | 77 | 70 | 72 | 76 |

| Sample | | 9 | 10 | 11 | 12 | 13 | 14 | 15 | 16 | 17 | 18 (Comp. example) | 19 (Comp. example) |
|---|---|---|---|---|---|---|---|---|---|---|---|---|
| Raw material | Fiber | LBKP 100% | LBKP 100% | LBKP 100% | LBKP 100% | LBKP:NBKP= 10%:90% | LBKP:NBKP= 50%:50% | LBKP:NBKP= 90%:10% | Abaca | PET | LBKP 100% | LBKP 100% |
| | Inorganic matter | Bentonite | Bentonite | Bentonite | Bentonite | Bentonite | Bentonite | Bentonite | Bentonite | Bentonite | Bentonite | Bentonite |

| | Binder | CMC | CMC | CMC | CMC | CMC | CMC | CMC | CMC | CMC | None | Hydrotalcite |
|---|---|---|---|---|---|---|---|---|---|---|---|---|
| Proportion (wt%) | Fiber | 49 | 49 | 49 | 49 | 49 | 49 | 49 | 49 | 49 | 50 | 50 |
| | Inorganic matter | 50 | 50 | 50 | 50 | 50 | 50 | 50 | 50 | 50 | 50 | 25 |
| | Binder | 1 | 1 | 1 | 1 | 1 | 1 | 1 | 1 | 1 | 0 | 25 |
| Observed value | Water content (%) | 26 | 55 | 7 | 4 | 6 | 5 | 6 | 4 | 7 | 7 | 5 |
| | Diameter (mm) | 1-3 | 1-3 | 0.5-1 | 10-100 | 2-4 | 3-5 | 4-6 | 4-6 | 4-6 | 1-3 | 1-3 |
| | Retention of inorganic matter (%) | 73 | 71 | 70 | 72 | 73 | 74 | 72 | 70 | 71 | 49 | 55 |

As shown in the table above, the retention of inorganic matter could be increased to 70 % or more even in contact with a liquid by adding CMC. Moreover, the retention of inorganic matter could be further increased by adding higher amounts of CMC (Samples 2, 4, 5).

In all cases where LBKP, or NBKP, or a combination of LBKP and NBKP was used as a wood-derived cellulose fiber, the retention of inorganic matter after contact with a liquid could be increased according to the present invention. Moreover, the size (diameter) of the assembly increased by incorporating long-fiber NBKP. In addition, the retention of inorganic matter could also be increased according to the present invention when abaca (Musa textilis) or PET fiber was used instead of the wood-derived cellulose fiber.

## Claims

1. An assembly comprising inorganic particles, a fiber and carboxymethyl cellulose or a salt thereof, which are aggregated to a size of 0.5 mm or more.

2. The assembly of claim 1, wherein the fiber comprises a cellulose fiber.

3. The assembly of claim 1 or 2, comprising 10 % by weight or more of the fiber.

4. The assembly of any one of claims 1 to 3, wherein the weight ratio B/A between the amount of the inorganic particles in the residue retained on a 45-mesh sieve (having an opening of 355 $\mu$m) after screening through the sieve (B) and the amount of the inorganic particles before screening (A) is 0.7 or more.

5. The assembly of any one of claims 1 to 4, having a size of 100 mm or less.

6. The assembly of any one of claims 1 to 5, having a water content of less than 60 %.

7. The assembly of any one of claims 1 to 6, comprising 0.1 to 30 % by weight of carboxymethyl cellulose or a salt thereof.

8. The assembly of any one of claims 1 to 7, wherein the inorganic particles comprise a metal salt of calcium, magnesium, barium or aluminum, or metal particles containing titanium, copper or zinc, or a silicate.

9. A process for preparing the assembly of any one of claims 1 to 8, comprising the steps of mixing a fiber, inorganic particles, and carboxymethyl cellulose or a salt thereof, and stirring the mixture.

10. The process of claim 9, further comprising the step of drying the assembly to a water content of less than 60 %.

Fig. 1

International application No.

PCT/JP2020/036833

**INTERNATIONAL SEARCH REPORT**

A. CLASSIFICATION OF SUBJECT MATTER
D21H 17/63(2006.01)i; C08J 3/12(2006.01)i; D21H 17/26(2006.01)i
FI: D21H17/63; D21H17/26; C08J3/12 CEP
According to International Patent Classification (IPC) or to both national classification and IPC

B. FIELDS SEARCHED

Minimum documentation searched (classification system followed by classification symbols)
D21H11/00-27/42; C08J3/00-3/28; D04H1/00-18/04

Documentation searched other than minimum documentation to the extent that such documents are included in the fields searched
Published examined utility model applications of Japan       1922-1996
Published unexamined utility model applications of Japan     1971-2020
Registered utility model specifications of Japan             1996-2020
Published registered utility model applications of Japan     1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2006-000782 A (PEPARLET CO., LTD.) 05 January 2006 (2006-01-05) claim 1, paragraphs [0026], [0038], [0041], [0045], example 3 | 1-10 |
| X | JP 2011-219892 A (OJI TOKUSHUSHI KK) 04 November 2011 (2011-11-04) claims 1-3, paragraphs [0018], [0022], [0050], production example 2 | 1-10 |
| X | JP 3-180585 A (LION CORP.) 06 August 1991 (1991-08-06) claim 1, page 2, lower left column, lines 4-20, page 2, lower right column, lines 14-18, page 3, upper right column, lines 7-9, page 3, lower left column, lines 11-19, table 1, examples 1-11, 13-16 | 1-10 |

☒ Further documents are listed in the continuation of Box C.    ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 20 November 2020 (20.11.2020) | 08 December 2020 (08.12.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

INTERNATIONAL SEARCH REPORT

International application No.

PCT/JP2020/036833

C (Continuation).   DOCUMENTS CONSIDERED TO BE RELEVANT

| Category* | Citation of document, with indication, where appropriate, of the relevant passages | Relevant to claim No. |
|---|---|---|
| E, A | JP 2020-179365 A (OJI HOLDINGS CORP.) 05 November 2020 (2020-11-05) claims 1, 7, 9, paragraph [0064] | 1-10 |
| A | JP 2019-006899 A (SANYO CHEMICAL INDUSTRIES, LTD.) 17 January 2019 (2019-01-17) claim 1, paragraphs [0055]-[0057], [0068], [0074]-[0075], example 1 | 1-10 |
| A | JP 9-505099 A (MINERALS TECHNOLOGIES, INC.) 20 May 1997 (1997-05-20) claims 1-5 | 1-10 |

Form PCT/ISA/210 (continuation of second sheet) (January 2015)

Form PCT/ISA/210 (patent family annex) (January 2015)

| | | | |
|---|---|---|---|
| **INTERNATIONAL SEARCH REPORT** | | International application No. | |
| Information on patent family members | | PCT/JP2020/036833 | |

| Patent Documents referred in the Report | Publication Date | Patent Family | Publication Date |
|---|---|---|---|
| JP 2006-000782 A | 05 Jan. 2006 | (Family: none) | |
| JP 2011-219892 A | 04 Nov. 2011 | (Family: none) | |
| JP 3-180585 A | 06 Aug. 1991 | (Family: none) | |
| JP 2020-179365 A | 05 Nov. 2020 | (Family: none) | |
| JP 2019-006899 A | 17 Jan. 2019 | (Family: none) | |
| JP 9-505099 A | 20 May 1997 | US 5492560 A | |
| | | WO 1995/013324 A1 | |
| | | EP 731826 A1 | |
| | | PL 314293 A | |
| | | FI 961974 A | |
| | | BR 9408016 A | |
| | | SK 58896 A | |
| | | NO 961848 D | |
| | | CA 2174940 A | |
| | | RU 2142483 C | |
| | | AT 215116 T | |
| | | PT 731826 E | |
| | | MY 131717 A | |
| | | TW 353124 B | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015199655 A
- JP 60006619 A